# EUROPÄISCHE PATENTSCHRIFT

(11) **EP 2 638 302 B1**
(45) Veröffentlichungstag und Bekanntmachung des Hinweises auf die Patenterteilung: **16.08.2017**
(21) Anmeldenummer: 11776184.1
(22) Anmeldetag: 28.10.2011
(51) Int. Cl.: F16C 23/08, F16C 33/76, F16C 33/78

(54) **ABGEDICHTETES WÄLZLAGER**
SEALED ANTI-FRICTION BEARING
ROULEMENT ÉTANCHE

(30) Priorität: 12.11.2010 DE 102010051230
(43) Veröffentlichungstag der Anmeldung: 18.09.2013
(73) Patentinhaber: Schaeffler Technologies AG & Co. KG, 91074 Herzogenaurach (DE)
(72) Erfinder: HOFBAUER, Felix, 97424 Schweinfurt (DE); SCHRÖDER, Rainer, 97440 Egenhausen (DE); GREHN, Martin, 97456 Dittelbrunn (DE)
(86) Internationale Anmeldenummer: PCT/EP2011/068993
(87) Internationale Veröffentlichungsnummer: WO 2012/062608

(56) Entgegenhaltungen:
- WO-A1-2010/099776
- US-A- 3 556 539
- US-A- 4 850 722
- US-A- 5 697 711
- US-B1- 6 402 158

## Beschreibung

### Gebiet der Erfindung

Die Erfindung betrifft ein abgedichtetes Wälzlager, umfassend eine ringförmige Dichtungsscheibe, die einen Wälzkörperraum in axialer Richtung abdichtet, wobei die Dichtungsscheibe einen Befestigungsabschnitt zum drehfesten Verbinden mit einem Lagerring des Wälzlagers aufweist und wobei die Dichtungsscheibe mit ihrem Befestigungsabschnitt in einer umlaufenden Nut des Lagerringes verankert ist. Derartige, abgedichtete Wälzlager, z.B. abgedichtete Pendelrollenlager, sind insbesondere für Lagerstellen geeignet, bei denen aus Platz- und/oder Kostengründen keine von dem Wälzlager unabhängige Dichtung vorgesehen werden kann.

### Hintergrund der Erfindung

Ein abgedichtetes Wälzlager soll einerseits einen Schutz des Wälzkörperraumes, also des bei einem Radiallager radial zwischen Laufbahnen angeordneten Bereichs des Wälzlagers, gegenüber der Umwelt ermöglichen. Dabei soll das Eindringen von Schmutz, Flüssigkeiten oder sonstigen Fremdkörpern in den Wälzkörperraum verhindert werden. Andererseits soll durch ein abgedichtetes Wälzlager ein Austreten des Schmierstoffes, typischerweise Schmierfett oder Schmieröl, nach außen verhindert oder zumindest auf ein akzeptables Maß reduziert werden. Insgesamt weist ein abgedichtetes Wälzlager somit eine höhere Lebensdauer als ein vergleichbares nicht abgedichtetes Wälzlager auf. Aus der US 6,402,158 B1 ist ein gattungsgemässes abgedichtetes Wälzlager bekannt. Aus der JP2007010114A ist ein abgedichtetes Wälzlager bekannt, an dessen Außenring sich auf einer ersten Stirnseite und einer zweiten Stirnseite jeweils eine umlaufende Nut befindet, wobei in jeder Nut eine Dichtungsscheibe mittels eines Befestigungsabschnittes verankert ist. Der Befestigungsabschnitt weist gemäß der JP2007010114A in einer die Lagerachse umfassenden Schnittdarstellung eine rechteckige Form auf, die der Form der Nut entspricht. Nachteilig bei der Lösung gemäß der JP2007010114A ist die nur unzureichende Abdichtung im Bereich des Befestigungsabschnittes sowie die Tatsache, dass die Dichtungsscheibe nur schwierig montiert bzw. demontiert werden kann.

Aus der US4872770 ist ein abgedichtetes Pendelrollenlager bekannt, wobei an jeweils einem axialen Ende des Pendelrollenlagers eine Dichtungsscheibe angeordnet ist, die mittels eines Befestigungsabschnittes in einer auf dem Lageraußenring eingebrachten Nut verankert ist. Nachteilig bei der US4872770 ist, dass zwischen dem Befestigungsabschnitt jeder Dichtungsscheibe und dem Lageraußenring nur eine mangelhafte Abdichtung vorliegt.

### Aufgabe der Erfindung

Der vorliegenden Erfindung liegt die Aufgabe zugrunde, ein abgedichtetes Wälzlager der eingangs geschilderten Art zu schaffen, welches eine optimale Abdichtung auch im Bereich des Befestigungsabschnittes gewährleistet, welches eine einfache Montage und Demontage der Dichtungsscheibe ermöglicht, welches eine hohe axiale Haltekraft der Dichtungsscheibe aufweist, welches eine hohe Haltekraft der Dichtungsscheibe in Umfangsrichtung aufweist, welches weiterhin eine gute radiale Zentrierung der Dichtungsscheibe ermöglicht und welches einfach und kostengünstig herzustellen ist.

### Zusammenfassung der Erfindung

Diese Aufgabe wird durch ein abgedichtetes Wälzlager gemäß dem unabhängigen Anspruch gelöst. Demzufolge ist ein gattungsgemäßes Wälzlager dadurch gekennzeichnet, dass der Befestigungsabschnitt ein erstes Klemmelement in Form eines Widerhakens aufweist sowie ein zweites Klemmelement in Form eines ringförmigen Wulstes aufweist und dass der Widerhaken und der Wulst mit gegenüberliegenden Flächen der Nut eine kraftschlüssige Verbindung eingehen.

Die Erfindung beruht dabei auf der Erkenntnis, den Befestigungsabschnitt mittels dem die Dichtungsscheibe an dem Lagerring verankert ist, mit einer zweifachen Klemm- und Dichtfunktion zu versehen. So soll eine kraftschlüssige Verbindung von Dichtungsscheibe und Lagering durch ein erstes und ein zweites Klemmeelement erfolgen und diese beiden Klemmelemente sollen gleichermaßen zur Abdichtung zwischen Dichtungsscheibe und Lagerring dienen.

Indem die beiden Klemmelemente auf sich gegenüberliegende Flächen der Nut einwirken, d.h. gegen diese drücken, lässt sich eine optimale Verankerung der Dichtungsscheibe schaffen. Durch hohe mögliche Verspannkraft zwischen Dichtungsscheibe und Lagerring, entsteht eine hohe axiale Haltekraft. Außerdem wird ein Mitdrehen der Dichtungsscheibe mit dem Lagerring im Vergleich zu bekannten Dichtungsanordnungen deutlich besser verhindert.

Dadurch dass der Befestigungsbereich an zwei sich gegenüberliegenden Flächen der Nut angedrückt wird, stellt sich darüber hinaus auch eine gegenüber dem Stand der Technik wesentlich bessere radiale Zentrierung der Dichtungsscheibe ein. Dies führt letztendlich auch zu einer verbesserten Dichtwirkung.

Erfindungsgemäß handelt es sich bei dem ersten Klemmelement um einen Widerhaken. D.h. es handelt sich um ein elastisch verformbares Element, welches nach dem Einbringen in die Nut eine hohe axiale Haltekraft aufweist. Das zweite Klemmelement ist durch einen umlaufenden Wulst gebildet.

Sowohl der Widerhaken als auch der Wulst umfassen vorzugsweise Elastomer, bzw. bestehen vorzugsweise komplett aus Elastomer. Beim Verankern der Dichtungsscheibe an dem Lagerring können sich Widerhaken und Wulst daher elastisch verformen und erzeugen damit nicht nur die kraftschlüssige Verbindung, sondern stellen auch die zweifache Dichtwirkung im Bereich des Befestigungsabschnittes bereit.

Das erfindungsgemäße, abgedichtete Wälzlager ist insbesondere als Radiallager geeignet. Beispielsweise kann es sich um ein Pendelrollenlager, ein Zylinderrollenlager, ein Kegelrollenlager oder ein Kugel(rollen)lager handeln. Es kann sich grundsätzlich um ein einreihiges oder ein mehrreihiges Wälzlager handeln.

Ausführungsformen der Erfindung sind in den Unteransprüchen angegeben.

Gemäß einer Ausführungsform ist vorgesehen, dass der Widerhaken eine erste Fläche der Nut kontaktiert und der Wulst eine zweite Fläche der Nut kontaktiert und dass sich der Widerhaken beim nicht eingebauten Zustand der Dichtungsscheibe radial über die erste Fläche der Nut erstreckt und sich die Wulst beim nicht eingebauten Zustand der Dichtungsscheibe radial über die zweite Fläche der Nut erstreckt. Die kraftschlüssige Verbindung zwischen Befestigungsabschnitt und Lagerring wird somit durch ein Übermaß des Befestigungsabschnittes, genaugenommen des Widerhakens und der Wulst, gegenüber der Nut erreicht.

Insbesondere wenn es sich bei dem erfindungsgemäßen Wälzlager um ein Radiallager handelt, kann gemäß einer weiteren Ausführungsform vorgesehen sein, dass die Nut in einer Stirnseite des Lagerringes eingebracht ist und dass der Widerhaken eine erste Mantelfläche der Nut, insbesondere eine radial nach außen gerichtete Mantelfläche, und die Wulst eine zweite Mantelfläche der Nut, insbesondere eine radial nach innen gerichtete Mantelfläche, kontaktiert.

Durch Gestaltung der Form und Position des Widerhakens sowie der durch den Widerhaken kontaktierten Fläche der Nut kann die kraftschlüssige Verbindung zwischen Befestigungsabschnitt und Lagerring präzise eingestellt werden. So kann gemäß einer Ausführungsform der Widerhaken axial bezogen auf einen Wälzlagermittelpunkt nach außen gerichtet sein. Es ergibt sich dadurch eine sehr große axiale Haltekraft der Dichtungsscheibe, während sich diese hingegen leicht auf den Lagerring montieren, also in die Nut einbringen, lässt. Weiterhin kann vorgesehen werden, dass die erste Mantelfläche eine umlaufende, im Wesentlichen radial nach außen gerichtete Haltenut zum Einschnappen des Widerhakens aufweist. Die Haltekraft wird hierdurch weiter verstärkt und der in der Haltenut eingeschnappte Widerhaken stellt eine sehr gute Dichtwirkung zur Verfügung.

Der Kontakt zwischen Widerhaken und Nut kann dabei über eine kegelstumpfförmige Endfläche des Widerhakens und eine ebenfalls kegelstumpfförmige Abstützfläche in der Nut erfolgen. Sofern der Widerhaken in eine Haltenut eingreift, kann es sich bei der Abstützfläche um eine Seitenfläche der Haltenut handeln. Gemäß einer Ausführungsform ist vorgesehen, dass eine Endfläche des Widerhakens mit einer zur Lagerachse senkrecht stehenden Ebene einen Winkel α einschließt und eine Abstützfläche des Lagerringes für den Widerhaken einen Winkel β mit der Ebene einschließt, wobei α kleiner oder gleich β ist. Durch die Wahl der Winkel α und β kann ein präzises Einschnappen der Haltenase in die Nut, z.B. mittels der Haltenut, erreicht werden. Die Differenz der Winkel α und β kann im Bereich von 0,5 Grad bis 20 Grad liegen. Sofern die Winkel α und β gleich groß sind, entsteht ein flächiger Kontakt zwischen der Endfläche des Widerhakens und der Abstützfläche des Lagerringes.

Um die Montage zu erleichtern, kann vorgesehen sein, dass zwischen einer axialen Endfläche des Befestigungsabschnittes und einem Nutgrund der Nut ein Spalt besteht. Dieser Spalt erlaubt ein Überdrücken der Dichtungsscheibe bei der Montage, so dass sichergestellt wird, dass sich der Widerhaken optimal in die Nut legen kann. Insbesondere wenn die Nut die umlaufende Haltenut aufweist, zeigte sich, dass mit diesem Spalt jederzeit gewährleistet wird, dass der Widerhaken komplett in der Haltenut einschnappen kann, nämlich indem ein Monteur die Dichtungsscheibe bis zu einem axialen Anschlag des Befestigungsabschnittes an dem Nutgrund einschiebt (Überdrücken).

Gemäß einer weiteren Ausführungsform ist vorgesehen, dass die Dichtungsscheibe einen Stabilisierungsabschnitt aufweist, der mindestens eine umlaufende Sicke aufweist und dass die Sicke derart positioniert ist, dass ein Anlaufen von Wälzkörpern des Wälzlagers an der Dichtungsscheibe ausschließlich im Bereich der Sicke erfolgt. Eine oder mehrere Sicken bewirken grundsätzlich bereits eine Verstärkung der Dichtungsscheibe, da deren Steifigkeit erhöht wird und die Dichtungsscheibe somit besser in Form und Position gehalten wird. Ein Vorteil, der insbesondere bei Wälzlagern mit großen Durchmessern zum Tragen kommt. Die mindestens eine Sicke soll jedoch weiterhin als Anlauf für Wälzkörper dienen. So kann die Sicke derart positioniert und ausgebildet sein, dass beispielsweise bei einem Pendelrollenlager, dessen bestimmungsgemäßer Ausschwenkwinkel überschritten wird, die Tonnenrollen mit ihren Stirnseiten an der Sicke anlaufen. Derart ausgebildete Sicken tragen wesentlich zur Erhöhung der Lebensdauer des abgedichteten Wälzlagers bei, denn im Vergleich zu herkömmlichen Dichtungsscheiben, mit oder ohne Sicken, bei denen Teile des Wälzlagerkäfigs an der Dichtungsscheibe anlaufen, tritt ein wesentlich kontrollierterer und somit reibungsärmerer Kontakt auf. Insbesondere kann vorgesehen sein, dass die mindestens eine Sicke axial in den Wälzkörperraum hineinragt.

Gemäß einer weiteren Ausführungsform ist vorgesehen, dass die Dichtungsscheibe einen Dichtlippenabschnitt zum abdichtenden Kontaktieren eines zweiten Lagerringes umfasst, wobei der Dichtlippenabschnitt einen axial nach außen geneigten Schenkel mit mindestens zwei Dichtlippen aufweist. Durch den axial nach außen geneigten Schenkel zeigt ein Endbereich des Schenkels axial von dem Wälzkörperraum weg. Dies ermöglicht ein kontrolliertes Austreten des im Wälzkörperraum befindlichen Schmiermittels, sobald dieses einen bestimmten Druck überschreitet (z.B. beim Nachschmieren des Wälzlagers). Der Dichtlippenabschnitt soll grundsätzlich nur einen abdichtenden Kontakt zu dem zweiten Lagerring bereitstellen und insbesondere eine relative Rotation zwischen beiden Elementen möglichst reibungsarm erlauben. Dies wird durch den Einsatz von - beispielsweise zwei - separaten Dichtlippen erreicht.

Gemäß einer weiteren Ausführungsform ist vorgesehen, dass die Dichtungsscheibe eine Armierung aufweist, wobei die Armierung im Bereich des Befestigungsabschnittes komplett mit Elastomer umgeben ist, wobei die Armierung im Bereich eines Stabilisierungsabschnittes nur auf einer axial außen liegenden Seite mit Elastomer umgeben ist, und wobei die Armierung im Bereich eines Dichtungsabschnittes komplett mit Elastomer umgeben ist. Die Armierung, z.B. mittels einer Armierungsscheibe aus Metall, führt generell zu einer Verbesserung der Steifigkeit der Dichtungsscheibe. Durch die gezielte Applikation eines Kunststoffes, z.B. Gummi, auf bestimmten Bereichen der Armierung, kann sowohl die gewünschte Verankerung der Dichtungsscheibe (durch elastische Verformung des aus Kunststoff bestehenden Widerhakens sowie des aus Kunststoff bestehenden Wulstes im Befestigungsabschnitt) als auch die notwendige Dichtungswirkung erreicht werden (im Befestigungsabschnitt und im Dichtungsabschnitt). Die blankliegende Armierung auf der axial in Richtung einer Lagermitte gewandten Seite des Stabilisierungsabschnittes ermöglicht ein Anlaufen der Wälzkörper, z.B. Rollenstirnflächen, an die Armierung der Dichtungsscheibe, wodurch ein Abrieb von Kunststoff durch diesen Kontakt verhindert wird. Sofern der Dichtlippenabschnitt einen (axial nach außen geneigten) Schenkel aufweist, kann dieser keine Armierung aufweisen. Durch diese Maßnahme wird ein Austritt von Schmierstoff aus dem Wälzkörperraum, z.B. beim Nachschmieren, erleichtert.

Gemäß einer weiteren Ausführungsform ist vorgesehen, dass das abgedichtete Wälzlager eine zweite ringförmige Dichtungsscheibe umfasst und an jeweils einem axialen Ende des Lagerringes eine Dichtungsscheibe verankert ist. Das Wälzlager ist somit als komplett abgedichtete Einheit ausgebildet. Selbstverständlich wäre ebenso denkbar, zwei erfindungsgemäße Wälzlager mit jeweils nur einer Dichtungsscheibe axial direkt nebeneinander anzuordnen, wobei die Dichtungsscheiben jeweils axial außen anzuordnen wären.

### Kurze Beschreibung der Zeichnungen

Ausführungsbeispiele der Erfindung werden im folgenden anhand der beigefügten Figuren näher beschrieben. Dabei zeigen
- Fig. 1: eine perspektivische Schnittdarstellung eines erfindungsgemäßen, abgedichteten Wälzlagers,
- Fig. 2: eine Detailansicht einer Schnittdarstellung des Wälzlagers aus Fig. 1 umfassend die Lagerachse,
- Fig. 3: Ausschnitte aus Fig. 2 und

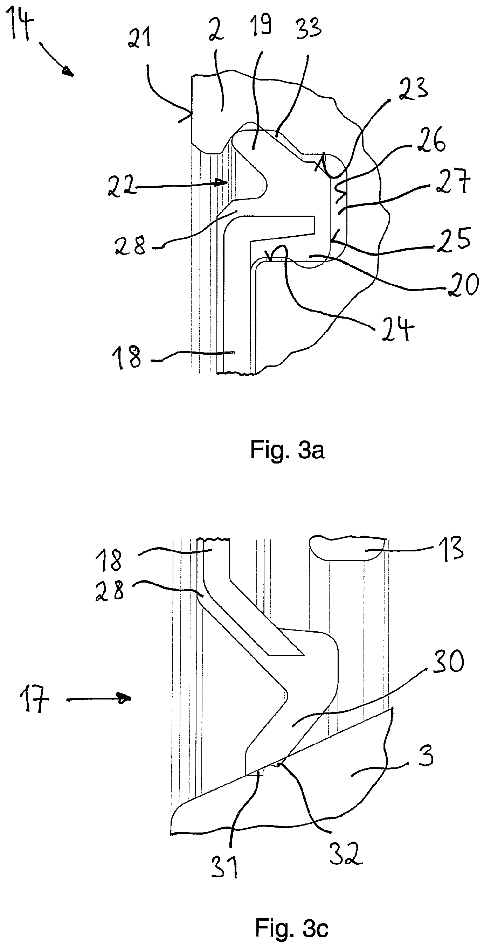

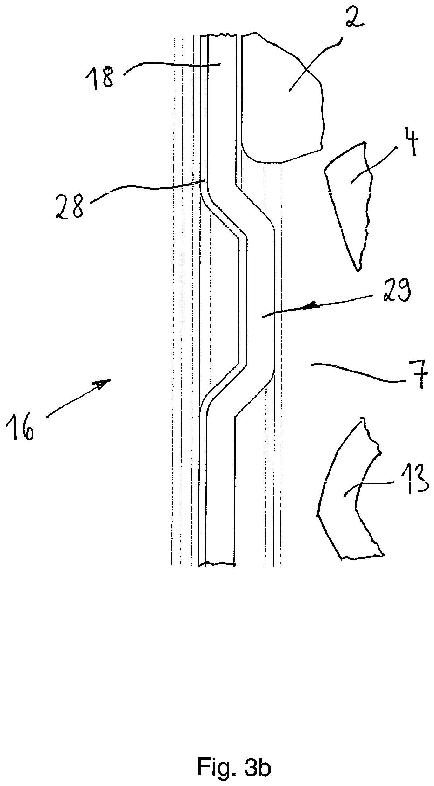

- Fig. 3: eine Detailansicht eines Befestigungsabschnittes gemäß einem zweiten Ausführungsbeispiel.

### Detaillierte Beschreibung der Zeichnungen

Gleiche bzw. funktionsgleiche Bauelemente werden im folgenden durch gleiche Bezugszeichen gekennzeichnet.

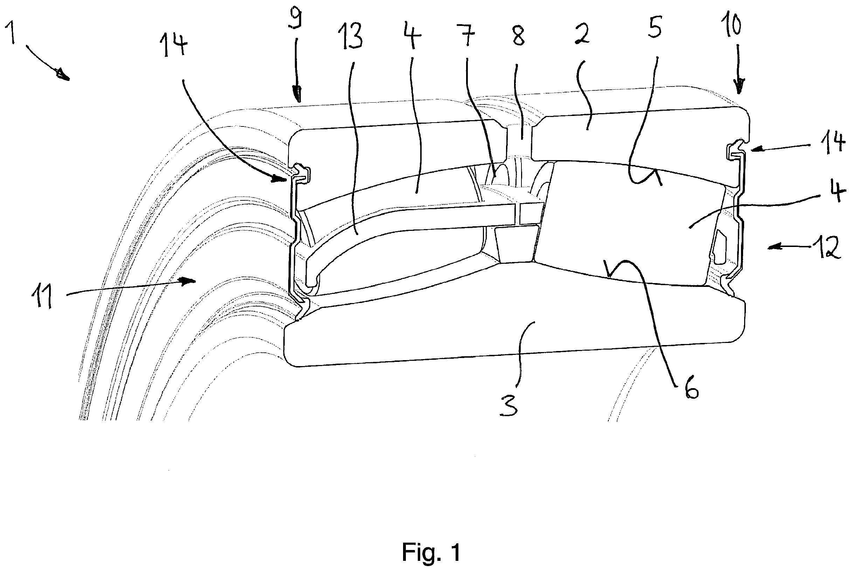

Fig. 1 zeigt eine perspektivische Schnittdarstellung eines erfindungsgemäßen, abgedichteten Wälzlagers 1. Es handelt sich bei dem Wälzlager 1 um ein Pendelrollenlager, umfassend einen ersten Lagerring 2, nämlich einen Außenring, einen zweiten Lagerring 3, nämlich einen Innenring, sowie eine Vielzahl von Wälzkörpern 4, die auf Laufbahnen 5, 6 des ersten und zweiten Lagerringes 2, 3 abrollen. Die Wälzkörper 4 werden durch einen Käfig 13 geführt.

Der zwischen den Laufbahnen 5, 6 gebildete Wälzkörperraum 7 ist teilweise mit nicht dargestelltem Schmiermittel befüllt. Das Schmiermittel kann über eine Nachschmierbohrung 8 nachgefüllt werden und wird durch zwei an den axialen Enden 9, 10 angeordnete Dichtungsscheiben 11, 12 vom Austreten in die Umgebung gehindert.

Die Dichtungsscheiben 11, 12 sind jeweils mittels eines Befestigungsabschnittes 14 mit dem ersten Lagerring 2 verankert. D.h. die Dichtungsscheiben 11, 12 sind drehfest mit dem Lagerring 2 verbunden.

Die Dichtungsscheiben 11, 12 an beiden axialen Enden 9, 10 sind identisch.

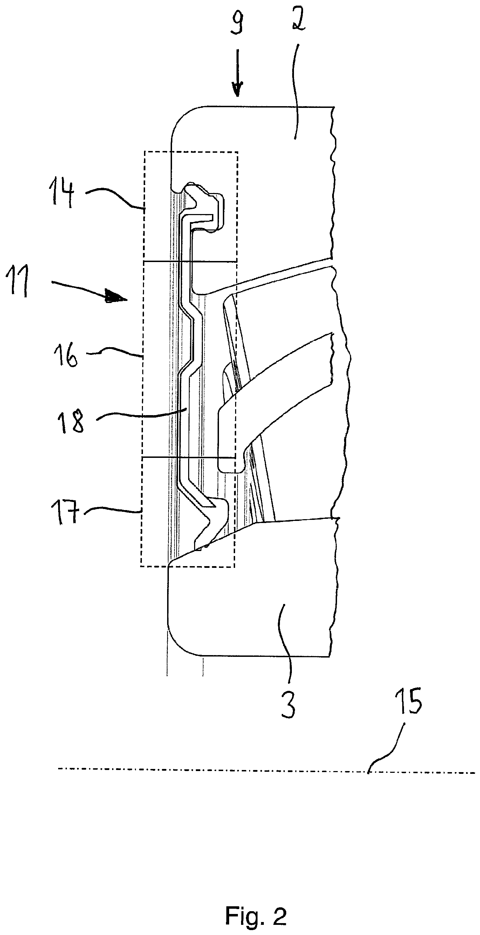

Fig. 2 zeigt eine Detailansicht einer Schnittdarstellung des Wälzlagers 1 aus Fig. 1 umfassend die Lagerachse 15. Dargestellt ist ein axiales Ende 9 des Wälzlagers 1.

Die an diesem axialen Ende 9 befindliche Dichtungsscheibe 11 umfasst drei Abschnitte: Einen Befestigungsabschnitt 14, mit dem die Dichtungsscheibe 11 an dem ersten Lagerring 2 verankert ist, einen Stabilisierungsabschnitt 16, der die Steifigkeit der Dichtungsscheibe 11 erhöht, und einen Dichtlippenabschnitt 17, der einen abdichtenden Kontakt zwischen Dichtungsscheibe 11 und zweitem Lagerring 3 bereitstellt. Der Befestigungsabschnitt 14 befindet sich somit an einem anderen Lagerring als der Dichtlippenabschnitt 17 und beide Abschnitte werden durch den Stabilisierungsabschnitt 16 voneinander getrennt. Die Abschnitte sind in Fig. 2 durch gestrichelte Linien zur Illustration umrandet.

Die Dichtungsscheibe 11 weist eine Armierung 18 in Form eines einzigen ringförmigen Metallbleches auf. Die Armierung 18 erstreckt sich vom Befestigungsabschnitt 14 über den Stabilisierungsabschnitt 16 bis hin zum Dichtlippenabschnitt 17.

Fig. 3a zeigt einen Ausschnitt aus Fig. 2, nämlich den Befestigungsabschnitt 14, der ein erstes Klemmelement in Form eines Widerhakens 19 und ein zweites Klemmelement in Form eines Wulstes 20 aufweist.

Der Befestigungsabschnitt 14 greift in eine auf einer Stirnseite 21 des ersten Lagerringes 2 angeordnete Nut 22 ein. Der Widerhaken 19 ist dabei in einer radial nach außen gerichteten Haltenut 33 in einer ersten Mantelfläche 23 der Nut 22 eingeschnappt. Der Wulst 20 kontaktiert eine zweite Mantelfläche 24 der Nut 22.

Zu Zwecken der Illustration ist in Fig. 3a auch die ursprüngliche Form des Widerhakens 19 und des Wulstes 20 dargestellt, also bevor die Dichtungsscheibe 11 in die Nut 22 eingesetzt wurde. Wie zu erkennen ist, weisen sowohl Widerhaken 19 als auch Wulst 20 gegenüber dem in der Einbauposition zur Verfügung stehenden Bauraum ein Übermaß auf. Dieses Übermaß sorgt einerseits für eine stabile und sich selbst zentrierende Verankerung der Dichtungsscheibe 11 in dem ersten Lagerring 2. Andererseits entstehen durch diese Übermaße gezielte Abdichtungsstellen an Widerhaken 19 und Wulst 20. Es zeigte sich, dass derart kontrollierte Abdichtungsstellen eine deutlich sicherere Abdichtung schaffen im Vergleich zu Abdichtungen des Befestigungsabschnittes, die sich über seine gesamte Erstreckung ausdehnen. Zwar ist die abgedichtete Strecke insgesamt kleiner, jedoch ist die Abdichtung über zwei kontrollierte und definierte Bereiche wesentlich besser zu kontrollieren, insbesondere auch in Bezug auf nicht zu vermeidende Fertigungstoleranzen.

Zwischen einer axialen Endfläche 25 des Befestigungsabschnittes 14 und einem Nutgrund 26 existiert ein Spalt 27, welcher bei der Montage der Dichtungsscheibe 11 sicherstellt, dass der Widerhaken 19 vollständig in die Haltenut 33 einschnappen kann, indem die Dichtungsscheibe 11 weiter in Richtung des Spaltes 27 geschoben werden kann, als es die Einbauposition verlangt.

Wie in Fig. 3a weiter zu erkennen ist, wird die Armierung 18 im Bereich des Befestigungsabschnittes im Wesentlichen vollständig von Kunststoff 28 umgeben. Der Widerhaken 19 und die Wulst 20 sind aus Kunststoff geformt.

In Fig. 3b ist der Stabilisierungsabschnitt 16 im Detail dargestellt, wobei eine axial in den Wälzkörperraum 7 gerichtete Sicke 29 gezeigt ist. Auf der axial zu einer Lagermitte gerichteten Seite der Dichtungsscheibe 11 weist die Armierung 18 keinen Kunststoffüberzug auf. Lediglich die axial nach außen gewandte Seite des Stabilisierungsabschnittes 16 weist einen Überzug aus Kunststoff 28 auf der Armierung 18 auf.

Die Sicke 29 ist derart positioniert und geformt, dass der Käfig 13 beim (extremen) Verschwenken des Pendelrollenlagers zu keiner Zeit in Berührung mit der Dichtungsscheibe 11 gelangen kann: Als erstes und einziges Element des Wälzkörpersatzes kontaktieren die - in Fig. 3b nicht dargestellten - Wälzkörper über ihre Stirnseiten die Sicke 29 der Dichtungsscheibe 11.

Fig. 3c zeigt eine vergrößerte Darstellung des Dichtlippenabschnittes 17, umfassend einen axial nach außen gerichteten Schenkel 30. Der vollständig aus Kunststoff bestehende Schenkel 30 weist zwei axial beabstandete Dichtlippen 31, 32 auf.

Zur Illustration sind in Fig. 3c die Dichtlippen 31, 32 in einem unverformten Zustand, d.h. bei einer unmontierten Dichtungsscheibe 11, angedeutet. Das Übermaß der unverformten Dichtlippen 31, 32 gegenüber der Einbauposition erzeugt eine zuverlässige, zweifache Dichtfunktion.

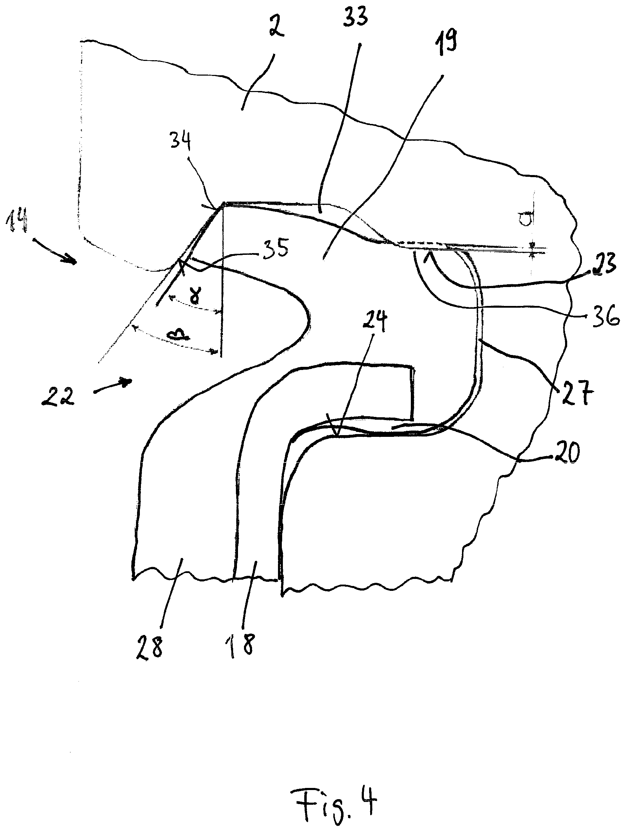

Fig. 4 zeigt in einer Detailansicht einen Befestigungsabschnitt gemäß einem zweiten Ausführungsbeispiel. Ein wesentlicher Unterschied zum ersten Ausführungsbeispiel ist, dass die Winkel α und β nun nicht mehr gleich groß sind, sondern vielmehr ist der Winkel α kleiner als der Winkel β.

Weiterhin weist der Befestigungsabschnitt 14 ein drittes Klemmelement in Form eines weiteren umlaufenden Wulstes 36 auf. Dieser Wulst 36 wird beim Eindrücken der Dichtungsscheibe in die Nut 22 elastisch verformt und steht in Kontakt mit der ersten Mantelfläche 23 der Nut 22. Der Wulst 36 ist auf einer Fläche der Dichtungsscheibe angeordnet, die der den Wulst 20 enthaltenden Fläche, nämlich der zweiten Mantelfläche 24, radial gegenüberliegt. Dadurch wird die Haltekraft der Dichtungsscheibe in Umfangsrichtung weiter erhöht. Beide Wulste 20, 36 sind im Wesentlichen konzentrisch angeordnet. In Fig. 4 ist das Maß der elastischen Verformung des Wulstes 36 durch den Überstand a gegenüber der unverformten Gestalt dargestellt.

**Bezugszeichenliste**

| | | | |
|---|---|---|---|
| 1 | abgedichtetes Wälzlager | 35 | Abstützfläche |
| 2 | erster Lagerring | 36 | Wulst |
| 3 | zweiter Lagerring | | |
| 4 | Wälzkörper | | |
| 5,6 | Laufbahn | | |
| 7 | Wälzkörperraum | | |
| 8 | Nachschm ierbohrung | | |
| 9,10 | axiales Ende des Wälzlagers | | |
| 11,12 | Dichtungsscheibe | | |
| 13 | Käfig | | |
| 14 | Befestigungsabschnitt | | |
| 15 | Lagerachse | | |
| 16 | Stabilisierungsabschnitt | | |
| 17 | Dichtlippenabschnitt | | |
| 18 | Armierung | | |
| 19 | Widerhaken | | |
| 20 | Wulst | | |
| 21 | Stirnseite | | |
| 22 | Nut | | |
| 23 | erste Mantelfläche | | |
| 24 | zweite Mantelfläche | | |
| 25 | axiale Endfläche | | |
| 26 | Nutgrund | | |
| 27 | Spalt | | |
| 28 | Kunststoff | | |
| 29 | Sicke | | |
| 30 | Schenkel | | |
| 31,32 | Dichtlippe | | |
| 33 | Haltenut | | |
| 34 | Endfläche | | |

## Patentansprüche

1. Abgedichtetes Wälzlager (1), umfassend eine ringförmige Dichtungsscheibe (11, 12), die einen Wälzkörperraum (7) in axialer Richtung abdichtet, wobei die Dichtungsscheibe (11, 12) einen Befestigungsabschnitt (14) zum drehfesten Verbinden mit einem Lagerring (2) des Wälzlagers (1) aufweist und wobei die Dichtungsscheibe (11, 12) mit ihrem Befestigungsabschnitt (14) in einer umlaufenden Nut (22) des Lagerringes verankert ist, wobei der Befestigungsabschnitt (14) ein erstes, aus einem nachgiebigen Elastomer (28) gebildeten Klemmelement in Form eines, radial nach außen gerichteten Widerhakens (19) aufweist, **dadurch gekennzeichnet, dass** der Befestigungsabschnitt (14) ein zweites, ebenfalls aus einem nachgiebigen Elastomer (28) gebildeten Klemmelement in Form eines radial nach innen gerichteten ringförmigen Wulstes (20) aufweist und dass der Widerhaken (19) und der Wulst (20), welche gegenüber der Nut (22) ein Übermaß haben und im mit der Nut (22) eingebauten Zustand mit gegenüberliegenden Flächen der Nut (22) eine kraftschlüssige Verbindung eingehen.

2. Abgedichtetes Wälzlager (1) nach Anspruch 1, **dadurch gekennzeichnet, dass** der Widerhaken (19) axial bezogen auf einen Wälzlagermittelpunkt nach außen gerichtet ist.

3. Abgedichtetes Wälzlager (1) nach Anspruch 1 oder 2, **dadurch gekennzeichnet, dass** der Widerhaken (19) eine erste Fläche der Nut (22) kontaktiert und der Wulst (20) eine zweite Fläche der Nut (22) kontaktiert und dass sich der Widerhaken (19) beim nicht eingebauten Zustand der Dichtungsscheibe (11, 12) radial über die erste Fläche der Nut (22) erstreckt und sich der Wulst (20) beim nicht eingebauten Zustand der Dichtungsscheibe (11, 12) radial über die zweite Fläche der Nut (22) erstreckt.

4. Abgedichtetes Wälzlager (1) nach einem der vorangegangenen Ansprüche, **dadurch gekennzeichnet, dass** die Nut (22) in einer Stirnseite (21) des Lagerringes (2) eingebracht ist und dass der Widerhaken (19) eine erste Mantelfläche (23) der Nut (22), insbesondere eine radial nach außen gerichtete Mantelfläche, und der Wulst (20) eine zweite Mantelfläche (24) der Nut (22), insbesondere eine radial nach innen gerichtete Mantelfläche, kontaktiert.

5. Abgedichtetes Wälzlager (1) nach Anspruch 4, **dadurch gekennzeichnet, dass** die erste Mantelfläche (23) eine umlaufende, im Wesentlichen radial nach außen gerichtete Haltenut (33) zum Einschnappen des Widerhakens (19) aufweist.

6. Abgedichtetes Wälzlager (1) nach einem der vorangegangenen Ansprüche, **dadurch gekennzeichnet, dass** eine Endfläche (34) des Widerhakens (19) mit einer zur Lagerachse senkrecht stehenden Ebene einen Winkel α einschließt und eine Abstützfläche (35) des Lagerringes (2) für den Widerhaken (19) einen Winkel β mit der Ebene einschließt, wobei α kleiner oder gleich β ist.

7. Abgedichtetes Wälzlager (1) nach einem der vorangegangenen Ansprüche, **dadurch gekennzeichnet, dass** zwischen einer axialen Endfläche des Befestigungsabschnittes (25) und einem Nutgrund (26) der Nut (22) ein Spalt (27) besteht.

8. Abgedichtetes Wälzlager (1) nach einem der vorangegangenen Ansprüche, **dadurch gekennzeichnet, dass** die Dichtungsscheibe (11, 12) einen Stabilisierungsabschnitt (16) aufweist, der mindestens eine umlaufende Sicke (29) aufweist und dass die Sicke (29) derart positioniert ist, dass ein Anlaufen von Wälzkörpern (4) des Wälzlagers (1) an der Dichtungsscheibe (11, 12) ausschließlich im Bereich der Sicke (29) erfolgt.

9. Abgedichtetes Wälzlager (1) nach Anspruch 8, **dadurch gekennzeichnet, dass** die mindestens eine Sicke (29) axial in den Wälzkörperraum (7) hineinragt.

10. Abgedichtetes Wälzlager (1) nach einem der vorangegangenen Ansprüche, **dadurch gekennzeichnet, dass** die Dichtungsscheibe (11, 12) einen Dichtlippenabschnitt (17) zum abdichtenden Kontaktieren eines zweiten Lagerringes (3) umfasst, wobei der Dichtlippenabschnitt (17) einen axial nach außen geneigten Schenkel (28) mit mindestens zwei Dichtlippen (31, 32) aufweist.

11. Abgedichtetes Wälzlager (1) nach einem der vorangegangenen Ansprüche, **dadurch gekennzeichnet, dass** die Dichtungsscheibe (11, 12) eine Armierung (18) aufweist, wobei die Armierung (18) im Bereich des Befestigungsabschnittes (14) komplett mit Elastomer (28) umgeben ist, wobei die Armierung (18) im Bereich eines Stabilisierungsabschnittes (16) nur auf einer axial außen liegenden Seite mit Elastomer (28) umgeben ist, und wobei die Armierung (18) im Bereich eines Dichtungsabschnittes (17) komplett mit Elastomer (28) umgeben ist.

12. Abgedichtetes Wälzlager (1) nach Anspruch 10, **dadurch gekennzeichnet, dass** der Schenkel (30) des Dichtlippenabschnittes (17) keine Armierung (18) aufweist.

## Claims

1. Sealed anti-friction bearing (1), comprising an annular sealing washer (11, 12) which seals a rolling body space (7) in the axial direction, the sealing washer (11, 12) having a fastening section (14) for being connected fixedly to a bearing ring (2) of the anti-friction bearing (1) so as to rotate with it, and the sealing washer (11, 12) being anchored by way of its fastening section (14) in a circumferential groove (22) of the bearing ring, the fastening section (14) having a first clamping element which is formed from a resilient elastomer (28), in the form of a radially outwardly directed barb (19), **characterized in that** the fastening section (14) has a second clamping element which is likewise formed from a resilient elastomer (28), in the form of a radially inwardly directed annular bulge (20), and **in that** the barb (19) and the bulge (20) which have an oversize with respect to the groove (22) and, in the state in which they are installed with the groove (22), enter into a non-positive connection with opposite faces of the groove (22).

2. Sealed anti-friction bearing (1) according to Claim 1, **characterized in that** the barb (19) is directed outwards axially in relation to an anti-friction bearing centre point.

3. Sealed anti-friction bearing (1) according to Claim 1 or 2, **characterized in that** the barb (19) makes contact with a first face of the groove (22), and the bulge (20) makes contact with a second face of the groove (22), and **in that**, in the non-installed state of the sealing washer (11, 12), the barb (19) extends radially beyond the first face of the groove (22) and, in the non-installed state of the sealing washer (11, 12), the bulge (20) extends radially beyond the second face of the groove (22).

4. Sealed anti-friction bearing (1) according to one of the preceding claims, **characterized in that** the groove (22) is made in an end side (21) of the bearing ring (2), and **in that** the barb (19) makes contact with a first circumferential face (23) of the groove (22), in particular a radially outwardly directed circumferential face, and the bulge (20) makes contact with a second circumferential face (24) of the groove (22), in particular a radially inwardly directed circumferential face.

5. Sealed anti-friction bearing (1) according to Claim 4, **characterized in that** the first circumferential face (23) has a circumferential, substantially radially outwardly directed holding groove (33) for snapping in the barb (19).

6. Sealed anti-friction bearing (1) according to one of the preceding claims, **characterized in that** an end face (34) of the barb (19) encloses an angle α with a plane which lies perpendicularly with respect to the bearing axis, and a supporting face (35) of the bearing ring (2) for the barb (19) encloses an angle β with the plane, α being smaller than or equal to β.

7. Sealed anti-friction bearing (1) according to one of the preceding claims, **characterized in that** there is a gap (27) between an axial end face of the fastening section (25) and a groove bottom (26) of the groove (22).

8. Sealed anti-friction bearing (1) according to one of the preceding claims, **characterized in that** the sealing washer (11, 12) has a stabilizing section (16) which has at least one circumferential bead (29), and **in that** the bead (29) is positioned in such a way that running of rolling bodies (4) of the anti-friction bearing (1) on the sealing washer (11, 12) takes place exclusively in the region of the bead (29).

9. Sealed anti-friction bearing (1) according to Claim 8, **characterized in that** the at least one bead (29) protrudes axially into the rolling body space (7).

10. Sealed anti-friction bearing (1) according to one of the preceding claims, **characterized in that** the sealing washer (11, 12) comprises a sealing lip section (17) for making sealing contact with a second bearing ring (3), the sealing lip section (17) having an axially outwardly inclined limb (28) with at least two sealing lips (31, 32).

11. Sealed anti-friction bearing (1) according to one of the preceding claims, **characterized in that** the sealing washer (11, 12) has a reinforcement (18), the reinforcement (18) being surrounded completely with elastomer (28) in the region of the fastening section (14), the reinforcement (18) being surrounded with elastomer (28) in the region of a stabilizing section (16) only on a side which lies axially on the outside, and the reinforcement (18) being surrounded completely with elastomer (28) in the region of a sealing section (17).

12. Sealed anti-friction bearing (1) according to Claim 10, **characterized in that** the limb (30) of the sealing lip section (17) does not have a reinforcement (18).

## Revendications

1. Palier à roulement étanchéifié (1), comprenant une rondelle d'étanchéité de forme annulaire (11, 12) qui étanchéifie dans la direction axiale un espace de corps de roulement (7), la rondelle d'étanchéité (11, 12) présentant une portion de fixation (14) pour la connexion solidaire en rotation à une bague de palier (2) du palier à roulement (1), et la rondelle d'étanchéité (11, 12) étant ancrée avec sa portion de fixation (14) dans une rainure périphérique (22) de la bague de palier, la portion de fixation (14) présentant un premier élément de serrage formé d'un élastomère flexible (28) sous la forme d'une barbe (19) orientée radialement vers l'extérieur, **caractérisé en ce que** la portion de fixation (14) présente un deuxième élément de serrage également formé à partir d'un élastomère flexible (28) sous forme d'un bourrelet annulaire (20) orienté radialement vers l'intérieur et **en ce que** la barbe (19) et le bourrelet (20), qui présentent un surdimensionnement par rapport à la rainure (22), et entrent en liaison par force avec des surfaces opposées de la rainure (22) dans l'état incorporé avec la rainure (22).

2. Palier à roulement étanchéifié (1) selon la revendication 1, **caractérisé en ce que** la barbe (19) est orientée axialement vers l'extérieur par rapport à un centre du palier à roulement.

3. Palier à roulement étanchéifié (1) selon la revendication 1 ou 2, **caractérisé en ce que** la barbe (19) vient en contact avec une première surface de la rainure (22) et le bourrelet (20) vient en contact avec une deuxième surface de la rainure (22) et **en ce que** la barbe (19), dans l'état non incorporé de la rondelle d'étanchéité (11, 12), s'étend radialement au-delà de la première surface de la rainure (22) et le bourrelet (20), dans l'état non incorporé de la rondelle d'étanchéité (11, 12), s'étend radialement au-delà de la deuxième surface de la rainure (22).

4. Palier à roulement étanchéifié (1) selon l'une quelconque des revendications précédentes, **caractérisé en ce que** la rainure (22) est introduite dans un côté frontal (21) de la bague de palier (2) et **en ce que** la barbe (19) vient en contact avec une première surface d'enveloppe (23) de la rainure (22), en particulier une surface d'enveloppe orientée radialement vers l'extérieur, et le bourrelet (20) vient en contact avec une deuxième surface d'enveloppe (24) de la rainure (22), en particulier une surface d'enveloppe orientée radialement vers l'intérieur.

5. Palier à roulement étanchéifié (1) selon la revendication 4, **caractérisé en ce que** la première surface d'enveloppe (23) présente une rainure de retenue périphérique (33), orientée essentiellement radialement vers l'extérieur pour l'encliquetage de la barbe (19).

6. Palier à roulement étanchéifié (1) selon l'une quelconque des revendications précédentes, **caractérisé en ce qu'**une surface d'extrémité (34) de la barbe (19) forme avec un plan perpendiculaire à l'axe du palier un angle α et une surface d'appui (35) de la bague de palier (2) pour la barbe (19) forme un angle β avec le plan, α étant inférieur ou égal à β.

7. Palier à roulement étanchéifié (1) selon l'une quelconque des revendications précédentes, **caractérisé en ce qu'**entre une surface d'extrémité axiale de la portion de fixation (25) et une base de rainure (26) de la rainure (22) se trouve une fente (27).

8. Palier à roulement étanchéifié (1) selon l'une quelconque des revendications précédentes, **caractérisé en ce que** la rondelle d'étanchéité (11, 12) présente une portion de stabilisation (16) qui présente au moins une moulure périphérique (29) et **en ce que** la moulure (29) est positionnée de telle sorte qu'une montée de corps de roulement (4) du palier à roulement (1) sur la rondelle d'étanchéité (11, 12) se produise exclusivement dans la région de la moulure (29).

9. Palier à roulement étanchéifié (1) selon la revendication 8, **caractérisé en ce que** l'au moins une moulure (29) pénètre axialement dans l'espace de corps de roulement (7).

10. Palier à roulement étanchéifié (1) selon l'une quelconque des revendications précédentes, **caractérisé en ce que** la rondelle d'étanchéité (11, 12) comprend une portion de lèvre d'étanchéité (17) pour le contact étanche d'une deuxième bague de palier (3), la portion de lèvre d'étanchéité (17) présentant une branche inclinée axialement vers l'extérieur (28) avec au moins deux lèvres d'étanchéité (31, 32).

11. Palier à roulement étanchéifié (1) selon l'une quelconque des revendications précédentes, **caractérisé en ce que** la rondelle d'étanchéité (11, 12) présente un renforcement (18), le renforcement (18) étant entouré complètement par de l'élastomère (28) dans la région de la portion de fixation (14), le renforcement (18), dans la région d'une portion de stabilisation (16), étant seulement entouré par l'élastomère (28) sur un côté situé axialement à l'extérieur, et le renforcement (18) étant entouré complètement par l'élastomère (28) dans la région d'une portion d'étanchéité (17).

12. Palier à roulement étanchéifié (1) selon la revendication 10, **caractérisé en ce que** la branche (30) de la portion de lèvre d'étanchéité (17) ne présente pas de renforcement (18).
